# EUROPEAN PATENT APPLICATION

(11) **EP 4 779 148 A1**
(43) Date of publication of application: **22.07.2026**
(21) Application number: 25152153.0
(22) Date of filing: 16.01.2025
(51) Int. Cl.: F03D 7/02, F03D 7/04

(54) **ADJUSTMENT OF BLADE PITCH CONTROL**

(71) Applicant: Siemens Gamesa Renewable Energy A/S, 7330 Brande (DK)
(72) Inventor: Alberts, Johannes Gerhardes Wardjan, 2660 Brøndby Strand (DK); Esbensen, Thomas, 7400 Herning (DK); Frouzakis, Nikolaos, 2450 Copenhagen (DK); Tibaldi, Carlo, 2300 København (DK); Vavatsikos, Panagiotis, 2500 Valby (DK); Rittel, Felix, 2900 Hellerup (DK)
(74) Representative: SGRE-Association

(57) **Abstract**

A method of controlling the operation of a wind turbine is provided. The wind turbine (100) comprises a wind turbine rotor (120) with one or more rotor blades and a control system (10) that operates at least one load reduction pitch control function (40, 50) configured to adjust a blade pitch angle to reduce a blade load. The method comprises monitoring an operating parameter of the wind turbine (100) using a blade load signal; generating, by the load reduction pitch control function (40, 50), a pitch adjustment output based on the monitored operating parameter; and determining if the operating parameter and/or the pitch adjustment output fulfills a predetermined criterion. If the predetermined criterion is fulfilled, an actual pitch adjustment is applied to one or more of the rotor blades (121, 122, 123). The operating parameter and/or the pitch adjustment output is further filtered by a filter (43, 53) having a low pass response.

## Description

### FIELD OF THE INVENTION

The present invention relates to a method of controlling the operation of a wind turbine that comprises a control system operating at least one load reduction pitch control function. It further relates to a corresponding control system and computer program.

### BACKGROUND

In several operating scenarios, the rotor blades of a wind turbine rotor, or the rotor itself, may be exposed to increased loads. A typical example is a wind gust that results in a large bending moment being applied to the rotor blade. As another example, in a half-wake situation, a yaw moment may be applied to the wind turbine rotor, wherein each rotor blade periodically experiences an increased blade load. As a further example, shear winds may result in a tilt moment being applied to the wind turbine rotor.

It is desirable to avoid such increased loads and in particular to avoid damage to the rotor blades of the wind turbine rotor and to other components of the wind turbine. For example, upon excessive bending of a rotor blade, the rotor blade may come into contact with the wind turbine tower, which may result in significant damage. It is known to reduce such loads using control schemes that reduce the blade or rotor loading in certain situations, such as a load-optimized pitch control (LOPC). Respective features may use blade load sensors to measure respective moments and may adjust the pitch angle to reduce loads. Although certain problems may be reduced by such control schemes, they may create additional problems, such as an increase in pitch-bearing damage (PBD) and a loss of annual energy production (AEP). Further, such control schemes may not avoid that a large amount of energy may be deposited in the yaw brake of the wind turbine in, e.g., a half-wake situation in which a yaw moment acts on the wind turbine rotor, which may cause heating and increased wear.

It is thus desirable to avoid damage to the wind turbine and to avoid an excessive loading of wind turbine rotor blades, the wind turbine rotor, and other wind turbine components. It is further desirable to increase the energy production of the wind turbine and/or avoid negative effects on the energy output of the wind turbine.

### SUMMARY

Accordingly, there is a need to mitigate at least some of the drawbacks mentioned above and to provide an improved load-optimization for the blades and the rotor of the wind turbine. It is particularly desirable to avoid damage to one or more components of the wind turbine and to avoid loss of energy production.

This need is met by the features of the independent claims. The dependent claims describe embodiments of the invention.

According to an aspect of the invention, a method of controlling the operation of a wind turbine is provided. The wind turbine comprises a wind turbine rotor with one or more rotor blades and a control system that operates at least one load reduction pitch control function (abbreviated herein as "pitch control function"). The pitch control function is configured to adjust a blade pitch angle to reduce a blade load. The method comprises monitoring an operating parameter of the wind turbine using a blade load signal obtained from at least one rotor blade of the wind turbine rotor, for example from each rotor blade. Further, a pitch adjustment output is generated by the load reduction pitch control function based on the monitored operating parameter. The method further comprises determining if the operating parameter and/or the pitch adjustment output fulfills a predetermined criterion. If the predetermined criterion is fulfilled, an actual pitch adjustment is applied to one or more of the rotor blades based on the pitch adjustment output. The method further comprises filtering the operating parameter and/or the pitch adjustment output by a filter having a low pass response. The filtering is carried out before it is determined if the operating parameter and/or the pitch adjustment output, respectively, fulfills the respective predetermined criterion.

By such method, the number of changes or number of activations of the pitch adjustment may be reduced significantly. By filtering the input or the output of the function that generates the pitch adjustment output using a filter having a low pass response, the fulfillment of the predetermined criterion can be based on such filtered signal, so that the frequency with which the actual pitch adjustment is applied to the one or more rotor blades may be reduced significantly. As a consequence, the number of changes of the pitch angle of the rotor blades may be reduced, which results in reduced wear of the blade bearings and a reduced number of activations of the blade pitch drive mechanism. As a result, pitch bearing damage (PBD) may be reduced. Further, as unnecessary activations of the pitch adjustment may be avoided, the loss in annual energy production that may be caused by such unnecessary pitch activations may be reduced. It may further be avoided that such load reduction control functions are activated during normal operation and not just in cases with extreme environmental conditions.

Further, depending on the implementation, such filtering may also accumulate/ integrate signal values (or absolute values thereof) of the operating parameter and/or the pitch adjustment output, wherein a high accumulated value in a short time period may indicate frequent pitch drive activations, e.g. pitching actions with a 1P component. Such activations may for example occur in half wake situations in which a yaw moment acts on the rotor and in which energy is accumulated in the yaw brake. Applying the criterion may indicate that energy deposited in the yaw brake has reached a limit and the actual pitch adjustment may be generated from the pitch adjustment output to counteract such yaw moment, e.g. by increasing a pitching amplitude of the pitch adjustment output. Thus, the load on the yaw brake may be reduced and excessive heating and wear thereof may be avoided.

Reducing the number of pitch activations by the method, or reducing the moments acting on the blades and/or the rotor may thus result in an increased lifetime of wind turbine components, including the blade bearings, the blade pitch drive, the blades themselves, and/or the yaw brake.

The pitch adjustment output may be a pitch angle or pitch offset, or may be any parameter indicative of a pitch adjustment, which may be applied for reducing a blade load and/or rotor load, such as a cyclic loading, bending moment, or the like. It may for example be a quantity that is comparable to a threshold for determining fulfillment of the criterion. The actual pitch adjustment may likewise be a pitch offset or a pitch angle, as described in more detail further below. The pitch adjustment output may be an intermediate result from which the actual pitch adjustment is determined. The determining if the criterion is fulfilled may be performed by the load reduction pitch control function.

The actual pitch adjustment may include any adjustment of the pitch control of the respective rotor blade(s). It may involve the application of a pitch angle, pitch angle offset, or may involve the adjustment of a blade pitch angle control, such as by freezing a current blade pitch angle, setting the current blade pitch angle to a target value, offsetting a control curve with which the blade pitch angle is adjusted, and the like.

While in some embodiments, the load reduction pitch control function always generates the pitch adjustment output, it may in other embodiments generate the pitch adjustment output only if the predetermined criterion is fulfilled, e.g. by the operating parameter.

In an embodiment, the filtering comprises one or a combination of applying a low pass filter, applying a band pass filter, determining an average, determining a cumulative average (or running average), in particular a weighted cumulative average, applying a moving average, applying exponential smoothing, applying a multi-rate filter, and/or applying a multi-rate limiter. The filtering may in particular be performed so as to reduce the variations of the respective signal (i.e., of the operating parameter and/or of the pitch adjustment output). Averaging may for example occur by calculating a running mean value, for example by integration with a forgetting factor so that values that lie further in the past have less impact, e.g. are weighted by a lower weight. A multi-rate filter for example has a different filter response depending on whether the signal to be filtered is increasing or decreasing, or depending on an amplitude of the unfiltered signal value, or depending on a rate of increase or decrease. The filter may for example be configured so that the filtered signal value will reduce faster if the actual pitch adjustment applied to the one or more of the rotor blades is low, e.g. below a respective threshold. A multi-rate limiter may limit the rate at which the respective filtered signal is allowed to change. Such filtering may provide an effective way of efficiently reducing the number of pitch activations, resulting in the above outlined advantages.

The filtering may also comprise integrating or accumulating values (for example over a predetermined time period or number of samples), e.g. values above a predefined threshold, and/or taking an absolute value of the respective signal.

Integration or accumulation may be performed to accumulate signal values over a time period. This may occur using, e.g., a forgetting function that removes values from the integration/accumulation that lie a certain time period in the past or a certain number of samples in the past. Said differently, values lying within a defined window that includes the last sample may be integrated/accumulated. Thus, if the operating parameter or the pitch adjustment output shows repeated frequent loads or activations in a relatively short period of time, the accumulated value will increase. This may allow detection of, e.g., a yaw moment acting on the rotor, or other cyclic behavior. As the respective signal values may be positive or negative, an absolute value of the respective signal may be taken. An absolute value may for example be formed prior to integration or accumulation.

The filtering of the operating parameter may occur with a time constant that is longer or with a cutoff frequency that is lower than a time constant or cutoff frequency, respectively, of a response of a monitoring function that monitors the operating parameter. Accordingly, high-frequency components of the monitored signal, e.g. having a shorter period than the time constant or a higher frequency than a cutoff frequency, may be damped efficiently. The filtering of the pitch adjustment output may occur with a time constant that is longer or with a cutoff frequency that is lower than a time constant or a cutoff frequency, respectively, of a response of the load reduction pitch control function. Again, this may efficiently damp variations of the pitch adjustment output that have a shorter time constant or a higher frequency. For example, in either case, the cutoff frequency may be lower than a frequency of a variation of the monitored signal due to a rotation of the wind turbine rotor. The cutoff frequency of the low pass filter may be lower than a rotational frequency of the wind turbine rotor, e.g. lower that a 1P component of a signal of the operating parameter.

In case of integration or accumulation, the time constant for filtering the operating parameter or the pitch adjustment output may correspond to the time over which the integration/accumulation occurs, which may be longer that a time constant of the monitoring function that monitors the operating parameter or of the response of the load reduction pitch control function, respectively.

As another example, averaging may occur over a time period longer than 1/3, 1/2, or 1 times the rotational period of the wind turbine rotor. Other choices of the time constant or cutoff frequency are certainly conceivable. The averaging may for example occur over more than 30 seconds, preferably more than 50 or more than 60 seconds if the operating parameter and/or the pitch adjustment output is filtered. Accumulation/integration preferably occurs over a time period longer than the rotational period of the wind turbine rotor, e.g. at least 2 or 3 times longer.

The filtering of the pitch adjustment output may also include combining, e.g. averaging, individual pitch adjustment outputs each generated for a different rotor blade. This may further reduce fluctuations. For example, the pitch adjustment outputs for two or three rotor blades may be averaged, in addition to the timewise averaging by, e.g., a cumulative or weighted cumulative average and/or the low pass filtering.

The operating parameter may comprise at least one of a blade (bending) moment of a rotor blade and a rotor moment of the wind turbine rotor (e.g., tilt or yaw moment).

For example, the operating parameter may comprise or may be one or a combination of: a tilt moment of the wind turbine rotor; a yaw moment of the wind turbine rotor; an out-of-plane moment of a blade of the wind turbine rotor (e.g. of each blade) or an average of the out-of-plane moment; a peak out-of-plane moment; a change of an out-of-plane moment, e.g. of an average out-of-plane moment of the blades of the wind turbine rotor; or a tip-to-tower clearance of a rotor blade tip to a tower of the wind turbine. A blade moment may be a bending moment, e.g. blade root bending moment, it may include a flapwise bending moment and/or an edgewise bending moment. Such bending moment may be converted into an out-of-plane bending moment, which may be used as operating parameter for a blade or collectively for the rotor. For example, for clearance control, the operating parameter may comprise an average out-of-plane moment (averaged over the rotor blades) and a rotor tilt moment. Use of such operating parameters may facilitate the operation of the load reduction pitch control function.

The load reduction pitch control function may comprises one or a combination of: an individual pitch control (IPC) function that employs a yaw moment and/or tilt moment of the wind turbine rotor as operating parameters to determine a pitch adjustment output for each individual blade to reduce blade loading; a blade load limiter (BLL) function that employs an out-of-plane moment for each rotor blade as operating parameters to estimate a peak moment for each blade to determine a pitch adjustment output for each blade to reduce the peak moment; a gust induced load limiting (GILL) function that employs positive changes of an average out-of-plane moment of the rotor blades as operating parameter to determine a pitch adjustment output for the rotor blades to reduce blade loading, and optionally tower loading; a tip-to-tower clearance control (TTCC) function that employs average out-of-plane moments of the rotor blades and a tilt moment of the wind turbine rotor as operating parameters to determine a pitch adjustment output for the individual rotor blades to reduce blade loading so as to increase or to keep above a limit a tip-to-tower clearance; or an activation reduction pitch control function (e.g., ELAD) that provides a collective pitch offset if the filtered operating parameter fulfills the predetermined criterion. Other pitch control functions may likewise be employed.

In an embodiment, the method further comprises ceasing the application of an actual pitch adjustment if the operating parameter and/or the pitch adjustment output fulfills a predetermined termination criterion. This may return the wind turbine to normal pitch control and may reduce the loss in energy production due to the actual pitch adjustment, e.g. due to the application of a pitch angle offset.

The predetermined criterion may for example be met if the operating parameter and/or the pitch adjustment output, respectively, exceeds a first threshold, and the predetermined termination criterion may be met if the operating parameter and/or the pitch adjustment output, respectively, drops below a second threshold. The second threshold may be the same as the first threshold or may be different, e.g. lower, than the first threshold. This may allow providing different criteria for enabling and disabling the actual pitch adjustment. It may thus be avoided that the pitch control fluctuates between an active and inactive actual pitch adjustment. In particular, a hysteresis may be applied by using such different criteria.

For example, the actual pitch adjustment may be applied for a predetermined minimum amount of time, wherein the seizing the application of the actual pitch adjustment is only enabled after expiry of the minimum amount of time. Thereby, it may be ensured that after applying the actual pitch adjustment, the control does not immediately change back to disabling the application of the actual pitch adjustment. This may be used additionally or alternatively to employing hysteresis by means of the first and second thresholds for enabling and disabling the application of the actual pitch adjustment.

In an embodiment, applying the actual pitch adjustment by the load reduction pitch control function to one or more of the rotor blades comprises at least one of: applying the actual pitch adjustment as a pitch offset to an optimum pitch angle of the respective rotor blade; applying a predefined pitch angle value that is larger than a default pitch angle value of the respective rotor blade for the prevailing operating conditions; or applying the actual pitch adjustment to one, two, or more points of a pitch angle operating curve, or to the whole curve, which defines an optimum pitch angle as a function of an operating parameter of the wind turbine. The operating parameter on which the optimum pitch curve may depend may for example be an output power of the wind turbine, a rotor speed of the wind turbine rotor, or a wind speed. Other pitch angle operating curves are also conceivable.

In another embodiment, applying the actual pitch adjustment comprises increasing a pitch amplitude of the pitch adjustment output (e.g. of a pitch offset or pitch value) and applying the pitch adjustment output with the increased pitch amplitude as the actual pitch adjustment. Increasing of the amplitude may comprise scaling the respective signal (e.g. multiplication with a factor larger than one) or applying other means of amplification. If the pitch adjustment output is the signal that is filtered and that is used to determine if the criterion is met, then the actual pitch adjustment may be generated from the unfiltered pitch adjustment output. The signal periodicity may in this case be preserved. Similarly, if the operating parameter is filtered and is used to determine if the criterion is met, then the unfiltered operating parameter may be provided to the load reduction pitch control function so that also in this case, the signal periodicity in the pitch adjustment output is preserved.

Increasing the pitch amplitude may provide an increased load reduction compared to the operation with a conventional load reduction pitch control function. Although in this implementation, the number of pitch drive activations may not be reduced, the method (i.e. the increased pitching amplitude) may reduce a moment acting on the wind turbine rotor, such as a yaw moment. In a half wake situation, the yaw moment may cause a cyclic activation of the pitch drives with a 1P component. However, a remaining yaw moment acing on the rotor may need to be counteracted by means of a yaw brake of the wind turbine. If the remaining yaw moment is high and/or persists over a prolonged period of time, energy may accumulate in the yaw brake and may cause significant heating, increased wear and potential damage.

This embodiment preferably uses filtering by integration or accumulation, as described above. Such situation in which a high and/or persistent rotor moment (e.g. yaw moment) is present may thereby be detected, in particular upon the accumulated/integrated operating parameter or pitch adjustment output exceeding a respective threshold. If the threshold is exceeded, the actual pitch adjustment may be generated from the pitch adjustment output so as to reduce the yaw moment. The actual pitch adjustment generated this way is preferably a pitch offset or a pitch angle value. It may be provided for adjusting the pitch angle of the respective rotor blade in any of the ways described herein.

In an embodiment, the at least one load reduction pitch control function comprises a first load reduction pitch control function that generates the pitch adjustment output from the monitored operating parameter, wherein the generated pitch adjustment output is filtered by the filter. The determining comprises determining if the filtered pitch adjustment output fulfills a first predetermined criterion. Accordingly, in such embodiment, at least the output of the pitch control function is filtered. Thereby, fluctuations of the pitch adjustment output may be reduced significantly, so that the criterion may less frequently be met, which may result in a reduced number of pitch activations, i.e. application of the actual pitch adjustment to the one or more rotor blades.

For example, the first predetermined criterion may be fulfilled if the filtered pitch adjustment output exceeds a predefined threshold, or if the filtered pitch adjustment output exceeds at least one of plural predefined thresholds. Two, three, or more thresholds may for example be employed. This may allow making the actual pitch adjustment dependent on the amplitude of the pitch adjustment output, e.g. on the threshold that is being exceeded.

Applying the actual pitch adjustment to one or more of the rotor blades based on the pitch adjustment output may comprise at least one of: applying an actual pitch adjustment as a function of the filtered pitch adjustment output to one or more of the rotor blades (the actual pitch adjustment may for example be the same as the pitch adjustment output or can be any function thereof, e.g. a proportionality function); applying a predefined actual pitch adjustment to one or more of the rotor blades (e.g. a predefined (constant) value or offset); applying an actual pitch adjustment associated with a threshold to one or more of the rotor blades, wherein each of plural predefined thresholds is associated with a different level of actual pitch adjustment, and wherein the actual pitch adjustment associated with a threshold (preferably with the highest thresholds) that has been exceeded by the filtered output pitch adjustment is applied; applying an actual pitch adjustment to one or more of the rotor blades that depends on an amount by which the filtered output pitch adjustment exceeds the threshold (e.g. is proportional to the amount); and applying an actual pitch adjustment to one or more of the rotor blades that lies between two predetermined thresholds, wherein one of the thresholds has been exceeded by the filtered output pitch adjustment. Thus, a plurality of possibilities exists how the actual pitch adjustment can be derived from the pitch adjustment output of the pitch control function. For example, if plural thresholds are employed, the actual pitch adjustment may increase stepwise with the exceedance of each threshold. Correspondingly, if the filtered pitch adjustment output drops below the respective thresholds (or offset second thresholds, if hysteresis is to be employed), the actual pitch adjustment may be reduced stepwise. After dropping below the lowest threshold, application of the actual pitch adjustment may be ceased.

When the pitch adjustment output is filtered, applying the actual pitch adjustment to one or more of the rotor blades may comprises at least one of: applying the actual pitch adjustment in addition to a pitch angle offset provided by the pitch adjustment output (e.g. the unfiltered output) generated by the first load reduction pitch control function (for example by applying combination, in particular a sum); or applying the maximum of the actual pitch adjustment and the pitch adjustment output (e.g. the unfiltered output) generated by the first load reduction pitch control function as a pitch offset. Also in these cases, the activations of the pitch control may be reduced significantly, since such maximum (or sum) of the two signals may for example only drop below the respective threshold with the time constant of the filtering, while the reaction time may be reduced, as the pitch adjustment output will increase instantly (e.g. upon detection of an increased load, low clearance, or the like).

In some embodiments, the pitch adjustment output is only generated if the filtered operating parameter fulfills the predetermined criterion.

In an embodiment, the at least one load reduction pitch control function comprises an activation reduction pitch control function (e.g., ELAD), wherein the operating parameter is filtered. The activation reduction pitch control function may determine if the filtered operating parameter fulfills a second predetermined criterion, wherein, if the second predetermined criterion is fulfilled, the pitch adjustment output is generated based on the filtered operating parameter. The pitch adjustment output may be applied as the actual pitch adjustment to the one or more rotor blades. In such embodiments, the input to the pitch control function may accordingly be filtered, and the filtered operating parameter may be used for determining if the actual pitch adjustment is to be applied. Such activation reduction pitch control function (e.g., the ELAD described further below), may be applied in parallel to a conventional load reduction pitch control function, or to the first load reduction pitch control function mentioned above.

The second predetermined criterion may be fulfilled if the filtered operating parameter exceeds a predefined operating parameter threshold, or if the filtered operating parameter exceeds at least one of plural predefined operating parameter thresholds. As mentioned above, such plural thresholds may for example be employed for a step-wise increase of the actual pitch adjustment.

Applying the actual pitch adjustment to the one or more rotor blades may comprise at least one of: applying a predefined actual pitch adjustment to one or more of the rotor blades, in particular a predefined pitch offset; applying a predefined actual pitch adjustment to each blade of the wind turbine rotor, in particular a predetermined collective pitch offset (e.g., the same or different predetermined pitch angle offset values may be applied to the pitch angle of the rotor blades); applying an actual pitch adjustment to one or more of the rotor blades that depends on an amount by which the filtered operating parameter exceeds an operating parameter threshold (e.g., it may be proportional thereto; for example, a collective pitch offset may be applied wherein the value of the offset depends on the exceedance amount); applying an actual pitch adjustment associated with an operating parameter threshold to one or more of the rotor blades, wherein each of plural predefined operating parameter thresholds is associated with a different level of actual pitch adjustment, and wherein the actual pitch adjustment associated with an operating parameter threshold (preferably the highest threshold) that has been exceeded by the filtered operating parameter is applied (this may provide a stepwise increase of a collective pitch offset upon exceedance of the respective operating parameter thresholds); or applying an actual pitch adjustment to one or more of the rotor blades that lies between two predetermined operating parameter thresholds, wherein one of the operating parameter thresholds has been exceeded by the filtered operating parameter.

Preferably, in each case, the respective actual pitch adjustment is applied as a collective pitch offset (e.g., as the same pitch offset applied to each blade).

By applying such collective pitch offset based on the filtered operating parameter, the collective load on the rotor blades may for example be reduced. Thereby, the load that may cause the activation of a conventional load reduction pitch control function (which may operate in parallel) can be reduced. Thus, the number of activations of such conventional LOPC function may be reduced, and thereby the number of pitch drive activations. Pitch bearing damage may thereby be reduced and the lifetime of bearings, a pitch drive and/or the blade may be increased.

Applying the actual pitch adjustment by the activation reduction pitch control function to one or more of the rotor blades may comprise at least one of: applying the actual pitch adjustment in addition to a pitch angle offset provided by a further load reduction pitch control function (e.g., by the first or by a conventional pitch control function); or applying the maximum of the actual pitch adjustment (as provided by the activation reduction pitch control function) and the output pitch adjustment generated by the first load reduction pitch control function as a pitch offset.

In an embodiment, the wind turbine operates a further load reduction pitch control function, wherein the further load reduction pitch control function generates a further pitch adjustment output based on the monitored operating parameter or based on a further monitored operating parameter. If the respective operating parameter and/or the further pitch adjustment output fulfills a further predetermined criterion, a further actual pitch adjustment is applied to one or more of the rotor blades based on the further pitch adjustment output. The further actual pitch adjustment may be applied to the one or more blades in addition to the actual pitch adjustment provided by the activation reduction pitch control function.

The further load reduction pitch control function may be a conventional LOPC function that provides a conventional fluctuating output, which may be provided in parallel. Accordingly, the output of both, the activation reduction and the further pitch control functions may be applied as an actual pitch adjustment to one or more of the rotor blades, e.g. by adding the respective adjustment values or by combined control. Further load reduction pitch control functions may operate in parallel, e.g. one or more further conventional LOPCs. By means of the input-filtered activation reduction pitch control function, the load on the wind turbine rotor may be reduced so that the frequency of activation of the one or more further pitch control functions can be reduced significantly, thus reducing PBD and improving component lifetime.

In an embodiment, the at least one load reduction pitch control function comprises the first load reduction pitch control function (in any configuration described above or further below) and further comprises the activation reduction pitch control function (in any configuration described above or further below), wherein the actual pitch adjustment provided by the activation reduction pitch control function is applied to the one or more blades in addition to the actual pitch adjustment provided by the first load reduction pitch control function. Both the pitch control function employing a filtered input and the pitch control function employing a filtered output may thus be operated in parallel.

In an embodiment in which the filtering involves integration or accumulation, and in which the actual pitch adjustment is provided by increasing a pitch amplitude of the pitch adjustment output, either the operating parameter or the pitch adjustment output may be filtered and used for determining if the criterion is met, for example by determining if the respective integrated or accumulated signal exceeds a corresponding threshold. Use of the operating parameter is however preferred.

According to a further aspect of the invention, a control system configured to control the operation of a wind turbine is provided. The wind turbine comprises a wind turbine rotor with one or more rotor blades, wherein the control system operates at least one load reduction pitch control function configured to adjust a blade pitch angle to reduce a blade load. The control system is configured to perform any of the methods described herein. The control system may for example comprise a processing unit and a memory, wherein the memory may store control instructions which, when executed on the proceeding unit, cause the control system to perform any of the methods described herein.

According to a further aspect of the invention, a wind turbine comprising a wind turbine rotor with one or more rotor blades (e.g. at least 2 or 3) is provided. The wind turbine further comprises a control system having any of the configurations described herein. The control system may be configured to control a pitch angle of each of the one or more rotor blades.

According to a further aspect of the invention, a computer program for controlling the operation of a wind turbine is provided. The wind turbine comprises a wind turbine rotor with one or more rotor blades, wherein the computer program comprises control instructions which, when executed by a processing unit of a control system of the wind turbine that operates at least one load reduction pitch control function configured to adjust a blade pitch angle to reduce a blade load, cause the processing unit to perform any of the methods disclosed herein. The computer program may be provided on a volatile or non-volatile data carrier or storage medium and/or may be provided via a communication connection, such as a wired or wireless network connection.

By such control system, wind turbine or computer program, advantages similar to those outlined further above with respect to the method may be achieved.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a wind turbine including a control system according to an embodiment.
Fig. 2 is a schematic block diagram illustrating a control system providing a filtering of an output of a load reduction pitch control function according to an embodiment.
Fig. 3 is a schematic diagram showing graphs that illustrate a pitch adjustment output, a filtered pitch adjustment output, and an actual pitch adjustment.
Fig. 4 is a flow diagram illustrating a method according to an embodiment that may be performed by the control system of Fig. 2.
Fig. 5 is a schematic block diagram illustrating a control system providing a filtering of an input to a load reduction pitch control function according to an embodiment.
Figs. 6 and 7 are schematic diagrams showing graphs that illustrate an operating parameter, a filtered operating parameter, and an actual pitch adjustment.
Fig. 8 is a flow diagram illustrating a method according to an embodiment that may be performed by the control system of Fig. 5.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

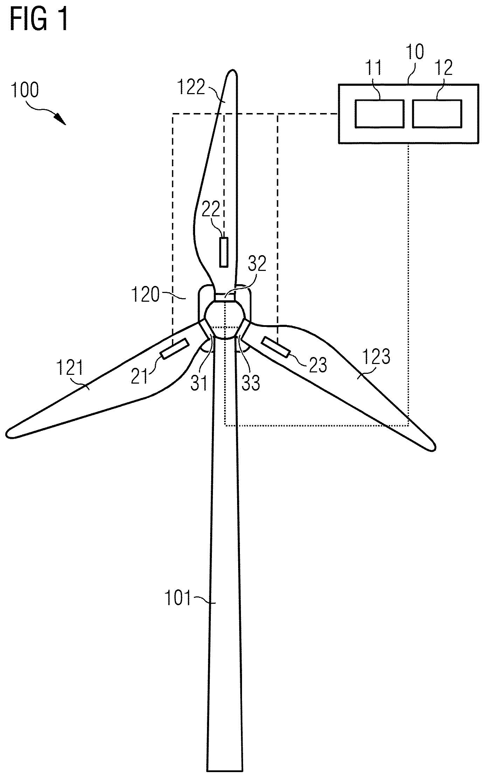

Fig. 1 schematically illustrates a wind turbine 100 comprising a wind turbine tower 101 and a wind turbine rotor 120. The rotor 120 has three rotor blades 121, 122 and 123. Wind turbine 100 may be an onshore, an offshore, or a floating wind turbine. Such wind turbines are generally known in the art, and wind turbine 100 may have any of the known configurations.

Wind turbine 100 comprises control system 10 that includes a processing unit 11 and a memory 12. Control system 10 may communicate with or comprise the load sensors 21, 22, 23 which are configured and arranged to measure blade loads of blades 121 to 123. Load sensors 21 to 23 may for example comprise strain sensors, such as an optical fiber measuring strain by measuring a change of refractive index. Control system 10 may receive respective blade load measurements from sensors 21 to 23.

Control system 10 may further be configured to control pitch drives 31, 32 and 33 of blades 121 to 123. Blades 121 to 123 may be mounted via a respective pitch bearing to a hub of rotor 120. Pitch drives 31 to 33 are operable to turn the respective blade about its longitudinal axis to thereby change the pitch angle. Pitch drives 31 to 33 may be electrically, hydraulically or pneumatically actuated, and any known pitch drive configuration may be employed.

Control system 10 may include a processing unit 11 coupled to a memory 12. Processing unit 11 may be a micro-processor, a digital signal processor, an application-specific integrated circuit, or the like. Memory 12 may comprise RAM, ROM, Flash-Memory, a hard disk drive and other types of memory. Memory 12 may store control instructions which, when executed by processing unit 11, cause the control system 10 to perform any of the methods disclosed herein. Control system 10 may be implemented in one or more controllers and may accordingly comprise plural processing units and plural memories. Control system 10 may comprise further components common to such control system, for example input/output interfaces, a system bus, a user interface and the like.

Control system 10 may for example implement one or more load reduction pitch control functions, for example in form of a load-optimized pitch control (LOPC) function. Such function may for example receive the input from the blade load sensors 21 to 23 and may change an individual and/or collective pitch angle to reduce loads. It may further implement a so-called "excessive LOPC activations detector" (ELAD) which may likewise be a load reduction pitch control function that reduces blade loading by controlling blade pitch angle, as described in more detail further below. Control system 10 may furthermore comprise a respective pitch controller that receives pitch control signals, such as pitch offsets provided by the LOPC and/or ELAD functions and generates a respective control signal for the pitch drives 31 to 33. Control system 10 may further comprise or be coupled to a wind turbine controller. Such wind turbine controller may control the overall operation of the wind turbine by, e.g., employing respective set-points for torque, output power, and/or other control variables, for example by making use of a maximum power point tracking (MPPT) control method.

Further below, two implementation examples of the disclosed solution are described in more detail. Both implementations may be used separately or in combination. It should be noted that both implementations provide a reduced risk of wind turbine damage while limiting loss in annual energy production. In particular, both implementations reduce pitch activations as seen by conventional LOPC functions and thereby reduce the risk of pitch-bearing damage. Further, as unnecessary pitch activations may be avoided, loss in energy production may be limited. Two alternative implementations of the same solution of solving the respective technical problem are thus provided.

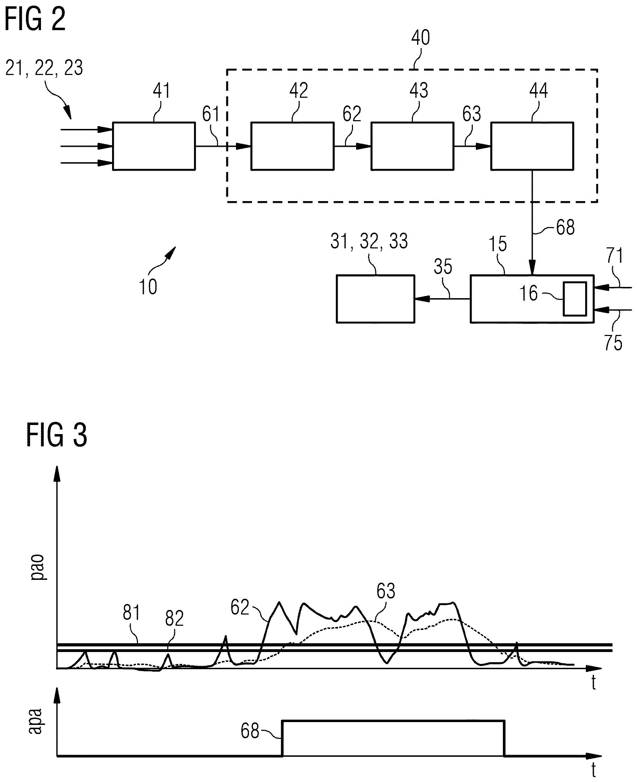

Fig. 2 illustrates an implementation in which the pitch activations are reduced by filtering the pitch adjustment output generated by the load reduction pitch control function. Based on the load measurements received from sensors 21 to 23, an operating parameter determination unit 41 determines one or more operating parameters 61, which are provided as a respective signal to the load reduction pitch control function 40, which in the present example may be an LOPC function. The LOPC function may be implemented in many different ways and may receive respective operating parameters 61. It may be implemented as an individual pitch control function (IPC) which may receive tilt and yaw moments of the wind turbine rotor determined by unit 41 from the blade load sensors. If these moments or combinations of these moments exceed a specified load threshold, a pitch offset may be determined for each individual plate to reduce the loading. It may further be implemented as a blade load limiter (BLL) function that receives the out-of-plane moments of each rotor blade from unit 41 and that calculates an estimate of a peak out of plane moment. It may further determine a pitch offset if the estimated peak moment exceeds a defined load threshold. Further, it may be implemented as a gust-induced load limiter (GLL) function that receive out of plane moments from unit 41 and determines positive changes of the average out-of-plane moments. If these exceeds a limit, respective pitch offset may be calculated and applied to the rotor blades. As the average out of plane moments increase during a wind gust, such pitch strategy may be appropriate to reduce extreme blade- and tower loads based on the out of plane moments. As a further implementation, LOPC 40 may implement a tip-to-tower clearance controller (TTCC) that may determine average out-of-plane moments from a received rotor blade out-of-plane moments and may further receive tilt moments of the wind turbine rotor. It may further determine a load function indicative of the blade tip to tower clearance. It may apply a pitch offset to individual blades to reduce the load on the respective blade to avoid the blade striking the tower. Pitching out the blade may offload the thrust on that plate, lowering the bending moment and tilting the rotor upwards. Other load reduction pitch control functions are conceivable, and the solution may be employed with any of these functions.

The one or more operating parameters 61 are received by a pitch adjustment output generation unit 42 that generates therefrom a pitch adjustment output 62. Pitch adjustment output 62 may for example be a (optimal) pitch offset that would be required to reduce the blade load to a predetermined level. Depending on the type of LOPC function, any other type of pitch adjustment output (pao) may be generated by unit 42.

Fig. 3 schematically illustrates a respective pitch adjustment output 62 over time for an exemplary application. In a conventional system, such output signal 61 is compared to a threshold 81, e.g. by the criterion test unit 44, to generate an actual pitch adjustment signal 68 in accordance with which the pitch angle of the rotor blade is adjusted by the pitch controller 15. The pitch adjustment output 62 fluctuates strongly and thus frequently intersects the threshold 81, which would result in frequent pitch drive activations. In the present solution, the pitch adjustment output 62 is received by a filter 43 that filters the pitch adjustment output to provide the filtered pitch adjustment output 63. Filter 43 may for example implement an averaging or integration function, for example a running or cumulative average, in particular a weighted cumulative average. For example, an integration with the forgetting factor that reduces the weight of older output values may be employed. In other implementations, filter 43 may comprise an exponential smoothing filter, a low-pass filter, or the like. The time constant of such averaging or the cutoff frequency of such low-pass filter may be chosen so that the filtering is significantly slower than the one used to filter blade loads or blade moments during the processing of the input signal, i.e. significantly slower than the response of the system that generates the pitch adjustment output 62. As can be seen in Fig. 3, the resulting filtered pitch adjustment output 63 fluctuates significantly less.

The filtered pitch adjustment output 63 is provided to the criterion test unit 44 that compares the filtered signal to a respective threshold 81. If the threshold 81 is exceeded by the filtered signal 63, an actual pitch adjustment 68 is generated. The actual pitch adjustment 68 is then provided to the pitch controller 15, for example in form of a pitch offset, or any other function that adjusts the pitch control.

The example of Fig. 3 illustrates in the lower diagram the actual pitch adjustment (apa) in curve 68, which is in the present example provided as a predetermined pitch offset. Accordingly, in this example, the value of the actual pitch adjustment does not depend on the amount by which the filtered signal 63 exceeds the threshold 81. In other implementations, unit 44 may generate the actual pitch adjustment 68 in any other manner disclosed herein, for example by employing an actual pitch adjustment that is proportional to the value by which the threshold 81 is exceeded, or that is a function of the filtered pitch adjustment output 63, or the like. Also, it is possible to provide plural thresholds 81, e.g. above threshold 81 shown in Fig. 3, and the value of the actual pitch adjustment 68 may depend on which of these thresholds is exceeded (i.e., if a higher threshold is exceeded, the actual pitch adjustment value is increased). A step-wise increase of the pitch adjustment, e.g. pitch offset, can thus be implemented. In other implementations, a continuous pitch adjustment may be applied between two such thresholds, e.g. as a continuous function of the filtered pitch adjustment output 63.

As can be seen in Fig. 3, the filtered pitch adjustment output 63 exceeds the threshold 81 less frequently, so that the number of pitch activations can be reduced. Further, it is beneficial to apply a hysteresis between activation and deactivation of the pitch adjustment. This may be achieved by defining a minimum amount of time for which the actual pitch adjustment 68 is applied and/or by employing a further second threshold 82. The actual pitch adjustment 68 is only deactivated if the filtered pitch adjustment output 63 drops below the second threshold 82. Accordingly, unnecessary deactivations and re-activations of the actual pitch adjustment may be avoided.

Pitch controller 15 may receive a main pitch control signal 75, e.g. from a wind turbine controller or from a control function thereof. Pitch controller 15 may receive a further pitch adjustment 71, e.g. from another LOPC function, or any other function of the wind turbine control that requires a respective pitch adjustment. Pitch controller 15 further receives the actual pitch adjustment 68 provided by the load reduction pitch control function 40. A combiner 16 may combine the main pitch control signal with the respective adjustment signals 68 and optionally 71, for example by adding respective pitch angle offsets. Pitch controller 15 then provides a respective pitch drive signal 35 to the blade pitch drives 31 to 33 to adjust the pitch angle of the rotor blades 121 to 123. Accordingly, in accordance with the respective LOPC function, the loading of the blades can be reduced while avoiding frequent activations of the blade pitch drives 31 to 33. The method and system may in particular allow still a rapid pitch adjustment by the load reduction pitch control function, while effectively reducing the fluctuations in these pitch adjustments to relief the wind turbine and prevent excessive pitch activity and pitch bearing damage.

The function 40 comprises at least the pitch adjustment output generation unit 42 and may optionally comprise the filter and the criterion test unit 44, which may alternatively be external to the function 40. Function 40 may further comprise the operating parameter determination unit 41.

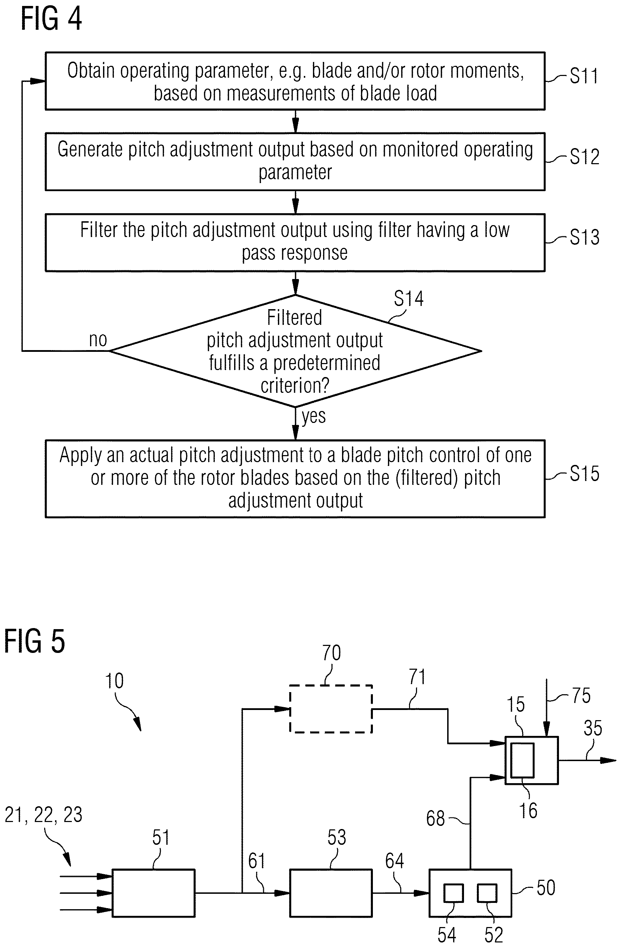

Fig. 4 is a flow-diagram illustrating an exemplary implementation of a method that may be performed by the respective control system. In step S11, the one or more operating parameters, such as blade and/or rotor moments, are obtained based on measurements of blade load by sensors 21 to 23. In step S12, the pitch adjustment output 62 is generated based on the monitored operating parameter(s) 61. The pitch adjustment output 62 is filtered using filter 43 in step S13. The filter 43 has a low-pass response and may be implemented in any of the above described ways. In step S14, unit 44 checks if the filtered pitch adjustment output fulfills a predetermined criterion, for example exceeds the threshold 81. If this is not the case, the method continues in step S11. In the affirmative, the method generates the actual pitch adjustment 68 which is applied to the blade pitch control 15 for controlling the pitch of one or more of the rotor blades (step S15). The actual pitch adjustment may again be removed if a predetermined termination criterion is met (not shown in Fig. 4), such as the respective filtered pitch adjustment output dropping below the threshold 81, or, if provided, below the second threshold 82.

Fig. 5 is a block diagram that shows a further possible implementation of the disclosed solution. The above explanations thus apply correspondingly to the embodiment of Fig. 5. Whereas in the embodiment of Fig. 2, the pitch adjustment output 62 is filtered, the embodiment of Fig. 5 provides filtering of the operating parameter 61.

Operating parameter determination unit 51 may again receive the load signals from the blade load sensors 21 to 23 and may operate in correspondence to unit 41 by determining respective blade and/or rotor moments, and/or any other operating parameter used by the respective load reduction pitch control function. In the present example, the load reduction pitch control function 50 operates in parallel to a further load reduction pitch control function 70, which may be any disclosed or known LOPC function (e.g. IPC, BLL, GLL, TTCC), or which may be the load reduction pitch control function 40 of Fig. 2. Function 50 operates on the same one or more operating parameters 61 as the further pitch control function 70. The further pitch control function 70 provides the further pitch adjustment 71 to the pitch controller 15, as described above.

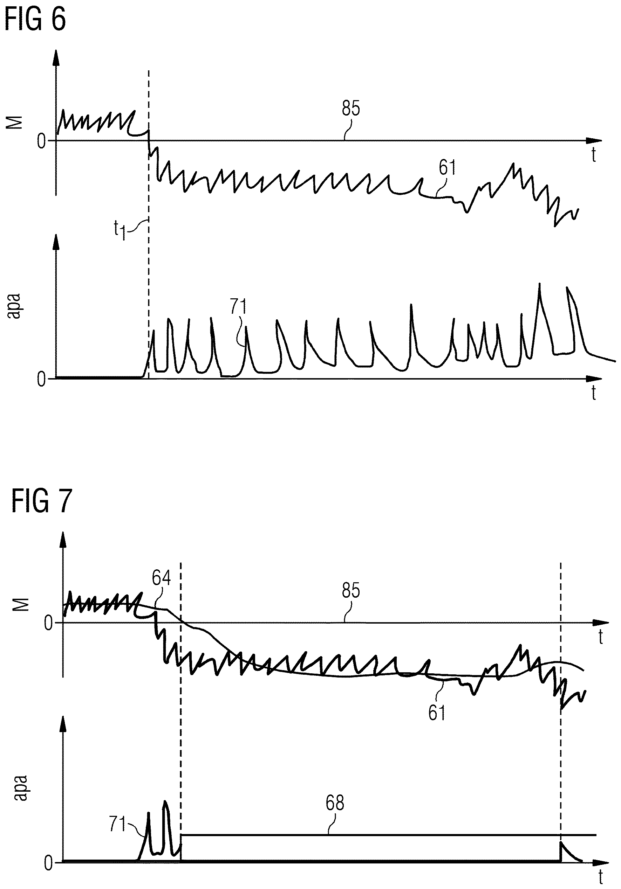

Fig. 6 illustrates the operating parameter 61 of such conventional LOPC, which is implemented as a blade tip-to-tower clearance control function. The upper graph of Fig. 6 illustrates the rotor tilt moment M over time, wherein at time t1, the tilt moment turns negative, i.e. exceeds the threshold 85 in negative direction. The control function 70 thus acts to improve the tip-to-tower clearance. The respective actual pitch adjustment signal 71 is shown in the lower graph of Fig. 6. The control function 70 thus repeatedly and periodically requests an individual pitch offset for the rotor blade that passes the tower, in order to increase the clearance between the blade tip and the tower. As can be seen, the blade pitch drive is thus frequently activated.

Turning back to Fig. 5, the one or more operating parameters 61 are received by a filter 53. Filter 53 may be implemented as described above with respect to filter 43. It may in particular have a low-pass response. For example, the filter may provide an averaging over a time period of more than 15, 30, or even more than 60 seconds. Alternatively, a respective low-pass filter having a respective (slow) response, i.e. a low cutoff frequency, may be employed. The filtered operating parameter 64 is thus generated. This is illustrated in the upper graph of Fig. 7, where it can be seen that the filtered operating parameter 64 fluctuates significantly less. The operating parameter is again the tilt moment M of the wind turbine rotor. The load reduction pitch control function 50 receives the filtered operating parameter and uses the criterion test unit 54 to determine if the filtered operating parameter fulfills a predetermined criterion. Again, such criterion may comprise that the respective filtered operating parameter exceeds one or more respective thresholds. Such threshold may be exceeded in positive or negative direction. In the present example, as illustrated in Fig. 7, the threshold 85 is the zero-tilt moment line, so that if the signal turns negative, the criterion is met. In case that the criterion is met, the pitch adjustment output generation unit generates a respective pitch adjustment output, that is in the present example directly provided to the pitch controller 15 as the actual pitch adjustment 68. Units 52 and 54 may operate as described above with respect to unit 44. In particular, plural thresholds may be employed, and the output pitch adjustment may be chosen either as a predetermined value, as a value that is proportional to the exceedance of the respective threshold, or plural thresholds may be employed and the pitch adjustment may be increased step-wise in dependence on the threshold that is exceeded.

The combiner 16 of the pitch controller 15 combines the main pitch control signal 57 with the pitch adjustment signal 71 from the further pitch control function 70, and with the actual pitch adjustment 68 from the pitch control function 50. The corresponding pitch drive signal 35 is provided to the pitch drives 31 to 33.

The lower graph of Fig. 7 illustrates the pitch adjustment 71 provided by the further pitch adjustment function 70 upon the operating parameter 61 exceeding the threshold 85 in negative direction. Upon the filtered operating parameter 64 exceeding the threshold 85 in negative direction, the actual pitch adjustment 68 is generated, as a predetermined constant value in the present example. It may for example be applied as a collective pitch offset, wherein the same or a similar offset value is applied to the pitch angle of each rotor blade 121 to 123. Accordingly, the loading of the three rotor blades is reduced collectively so that the desired tip-to-tower clearance is achieved. As a consequence, no further activations of the pitch control by the further LOPC function 70 is necessary. Thus, the number of pitch drive activations is reduced significantly.

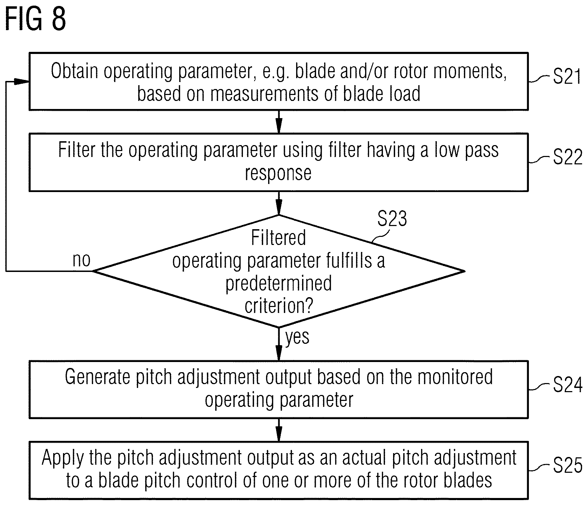

Fig. 8 illustrates a flow-diagram of a method that may be performed by the control system to implement the solution illustrated in Fig. 5. In step S21, the operating parameter(s) 61 is obtained based on the blade load measurements from blade load sensors 21 to 23. In step S22, the operating parameter is filtered (filter 53) with a low-pass response to obtain the filtered operating parameter 64. In step S23, unit 54 checks if the filtered operating parameter fulfills a predetermined criterion. If this is not the case, the monitoring of the operating parameter continues in step S21. In the affirmative, the method continues in step S24 with the generation of the pitch adjustment output by unit 52 based on the monitored operating parameter. As mentioned above, this can occur in a variety of ways, for example by using a predetermined fixed value for the pitch adjustment output, or by making it proportional to a deviation of the filtered operating parameter from the respective threshold. The pitch adjustment output is then provided as an actual pitch adjustment 68 to the blade pitch controller 15 to control the blade pitch of the one or more rotor blades (step S25). As mentioned above, the actual pitch adjustment may be combined with a main pitch control signal and optionally with a further pitch adjustment 71 received from a further pitch control function 70.

The pitch control function 50 may thus also be termed "excessive LOPC activations detector" (ELAD), as by using the slow low-pass filter, it is detected that the respective change of the blade or rotor moment is not transitory, but will be present for a longer period of time. Typical examples are a half-wake situations, shear winds, or the like. By adding a respective collective pitch offset, frequent pitch drive activations, which may occur periodically in such operating situations, can be avoided. Further, the loss of energy production is essentially the same as the loss experienced when the further pitch control function 70 is constantly active and repeatedly pitches out the rotor blades to reduce the load of the blade over part of the rotational cycle. Although the above example has been described with respect to a function that monitors the tip-to-tower clearance, it may be employed with any other load reduction pitch control function, in particular with the functions outlined further above.

In all of the above examples, the actual pitch adjustment 68 may be applied as a pitch offset to a pitch angle operating curve, which may for example define a pitch angle for the rotor blades in dependence on an operating parameter, such as in dependence on power output, rotor speed, or the like of the wind turbine. In other implementations, one, two, three or more points of such pitch angle operating curve may be adjusted. In even other implementations, the pitch adjustment can be applied as a predefined pitch value, which may be larger than the default pitch value for the respective operating conditions. Other implementations are conceivable, such as applying the actual pitch adjustment by adding to, or by selecting a maximum value of, the current pitch angle output determined by the respective load reduction pitch control function.

It is further noted that by providing the functions 50, 70 in parallel, the conventional LOPC function 70 can continue to operate using the same criteria. Therefore, it will be ensured that the blades will not strike the tower. Thus, the pitch control function 50 acts independently but it may ensure that if respective moments exist for prolonged period of times, frequent pitch drive activations to counter such moments will be avoided. Further, if the operating parameter, e.g. the respective tilt moment or the like, exceeds the threshold by a large amount, both functions may act together and may thus alleviate even larger loads. The pitch control function 50 may further act in parallel with plural further LOPC functions 70.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of a wind turbine, wherein the wind turbine (100) comprises a wind turbine rotor (120) with one or more rotor blades and a control system (10) that operates at least one load reduction pitch control function (40, 50) configured to adjust a blade pitch angle to reduce a blade load, wherein the method comprises:
- monitoring an operating parameter of the wind turbine (100) using a blade load signal obtained from at least one rotor blade (121, 122, 123) of the wind turbine rotor (120);
- generating, by the load reduction pitch control function (40, 50), a pitch adjustment output based on the monitored operating parameter; and
- determining if the operating parameter and/or the pitch adjustment output fulfills a predetermined criterion and if the predetermined criterion is fulfilled, applying an actual pitch adjustment to one or more of the rotor blades (121, 122, 123) based on the pitch adjustment output,
wherein the method further comprises:
- filtering the operating parameter and/or the pitch adjustment output by a filter (43, 53) having a low pass response, wherein the filtering is carried out before it is determined if the operating parameter and/or the pitch adjustment output, respectively, fulfills the predetermined criterion.

2. The method according to claim 1, wherein the filtering comprises one or a combination of applying a low pass filter, applying a band pass filter, determining an average, determining a cumulative average or a weighted cumulative average, integrating or accumulating values, preferably over a predetermined time period or number of samples, applying exponential smoothing, applying a multi-rate filter, taking an absolute value, or applying a multi-rate limiter.

3. The method according to claim 1 or 2, wherein the filtering of the operating parameter (61) occurs with a time constant that is longer or with a cutoff frequency that is lower than a time constant or cutoff frequency, respectively, of a response of a monitoring function (51) that monitors the operating parameter, and/or
wherein the filtering of the pitch adjustment output (62) occurs with a time constant that is longer or with a cutoff frequency that is lower than a time constant or cutoff frequency, respectively, of a response of the unit (42) generating the pitch adjustment output (62).

4. The method according to any of the preceding claims, wherein the operating parameter (61) comprises a blade moment and/or wind turbine rotor moment, or wherein the operating parameter (61) comprises one or a combination of:
- a tilt moment of the wind turbine rotor;
- a yaw moment of the wind turbine rotor;
- an out-of-plane moment of a blade of the wind turbine rotor or an average of the out-of-plane moment;
- a peak out of plane moment;
- a change of an out-of-plane moment or an average out-of-plane moment of the blades of the wind turbine rotor; or
- a tip-to-tower clearance of a rotor blade tip to a tower of the wind turbine.

5. The method according to any of the preceding claims, wherein the load reduction pitch control function (40, 50) comprises one or a combination of:
- an individual pitch control function that employs a yaw moment and/or tilt moment of the wind turbine rotor as operating parameters to determine a pitch adjustment output for each individual blade to reduce blade loading;
- a blade load limiter function that employs an out-of-plane moment for each rotor blade as operating parameters to estimate a peak moment for each blade to determine a pitch adjustment output for each blade to reduce the peak moment;
- a gust induced load limiting function that employs positive changes of an average out-of-plane moment of the rotor blades as operating parameter to determine a pitch adjustment output for the rotor blades to reduce blade loading;
- a tip-to-tower clearance control function that employs average out-of-plane moments of the rotor blades and tilt moment of the wind turbine rotor as operating parameters to determine a pitch adjustment output for the individual rotor blades to reduce blade loading to increase tip-to-tower clearance; or
- an activation reduction pitch control function that provides a collective pitch offset if the filtered operating parameter fulfills the predetermined criterion.

6. The method according to any of the preceding claims, further comprising ceasing the application of an actual pitch adjustment (68) if the operating parameter and/or the pitch adjustment output fulfills a predetermined termination criterion.

7. The method according to any of the preceding claims, wherein applying the actual pitch adjustment (68) by the load reduction pitch control function (40, 50) to one or more of the rotor blades (121, 122, 123) comprises at least one of:
- applying the actual pitch adjustment as a pitch offset to an optimum pitch angle of the respective rotor blade;
- applying a predefined pitch angle value that is larger than a default pitch angle value of the respective rotor blade for the prevailing operating conditions;
- applying the actual pitch adjustment to one, two, or more points of a pitch angle operating curve that defines an optimum pitch angle as a function of an operating parameter of the wind turbine, or to the whole pitch angle operating curve, or
- increasing a pitch amplitude of the pitch adjustment output and applying the pitch adjustment output with the increased pitch amplitude as the actual pitch adjustment.

8. The method according to any of the preceding claims, wherein the at least one load reduction pitch control function comprises a first load reduction pitch control function (40) that generates the pitch adjustment output (62) from the monitored operating parameter (61), wherein the generated pitch adjustment output (62) is filtered by the filter (43), and wherein the determining comprises determining if the filtered pitch adjustment output (63) fulfills a first predetermined criterion.

9. The method according to claim 8, wherein the first predetermined criterion is fulfilled if the filtered pitch adjustment output (63) exceeds a predefined threshold (81), or if the filtered pitch adjustment output (63) exceeds at least one of plural predefined thresholds.

10. The method according to claim 8 or 9, wherein applying the actual pitch adjustment (68) to one or more of the rotor blades (121, 122, 123) based on the pitch adjustment output comprises at least one of:
- applying an actual pitch adjustment (68) as a function of the filtered pitch adjustment output to one or more of the rotor blades;
- applying a predefined actual pitch adjustment to one or more of the rotor blades (121, 122, 123);
- applying an actual pitch adjustment associated with a threshold to one or more of the rotor blades (121, 122, 123), wherein each of plural predefined thresholds is associated with a different level of actual pitch adjustment, and wherein the actual pitch adjustment associated with a threshold that has been exceeded by the filtered pitch adjustment output (63) is applied;
- applying an actual pitch adjustment to one or more of the rotor blades (121, 122, 123) that depends on an amount by which the filtered pitch adjustment output (63) exceeds a predefined threshold (81);
- applying an actual pitch adjustment to one or more of the rotor blades that lies between two predetermined thresholds, wherein one of the thresholds has been exceeded by the filtered pitch adjustment output (63).

11. The method according to any of the preceding claims, wherein the at least one load reduction pitch control function comprises an activation reduction pitch control function (50), wherein the operating parameter (61) is filtered and wherein the activation reduction pitch control function determines if the filtered operating parameter (64) fulfills the predetermined criterion, wherein, if the predetermined criterion is fulfilled, the pitch adjustment output is generated based on the filtered operating parameter (64) and the pitch adjustment output is applied as the actual pitch adjustment (68) to the one or more rotor blades (121, 122, 123).

12. The method according to claim 11, wherein applying the actual pitch adjustment (68) to the one or more rotor blades (121, 122, 123) comprises at least one of:
- applying a predefined actual pitch adjustment to one or more of the rotor blades (121, 122, 123), in particular a predefined pitch offset;
- applying a predefined actual pitch adjustment to each blade (121, 122, 123) of the wind turbine rotor (120), in particular a predetermined collective pitch offset;
- applying an actual pitch adjustment to one or more of the rotor blades (121, 122, 123) that depends on an amount by which the filtered operating parameter (64) exceeds an operating parameter threshold (85);
- applying an actual pitch adjustment associated with an operating parameter threshold to one or more of the rotor blades (121, 122, 123), wherein each of plural predefined operating parameter thresholds is associated with a different level of actual pitch adjustment, and wherein the actual pitch adjustment associated with an operating parameter threshold that has been exceeded by the filtered operating parameter is applied; or
- applying an actual pitch adjustment to one or more of the rotor blades (121, 122, 123) that lies between two predetermined operating parameter thresholds, wherein one of the operating parameter thresholds has been exceeded by the filtered operating parameter.

13. The method according to any of the preceding claims, wherein the wind turbine (100) operates a further load reduction pitch control function (70), wherein the further load reduction pitch control function (70) generates a further pitch adjustment output based on the monitored operating parameter (61) or on a further monitored operating parameter, and wherein if the respective operating parameter and/or the further pitch adjustment output fulfills a further predetermined criterion, a further actual pitch adjustment (71) is applied to one or more of the rotor blades based on the further pitch adjustment output, the further actual pitch adjustment being applied to the one or more blades (121, 122, 123) in addition to the actual pitch adjustment (68) provided by the load reduction pitch control function (40, 50).

14. A control system configured to control the operation of a wind turbine, wherein the wind turbine (100) comprises a wind turbine rotor (120) with one or more rotor blades (121, 122, 123), wherein the control system (10) operates at least one load reduction pitch control function (40, 50) configured to adjust a blade pitch angle to reduce a blade load, wherein the control system (10) is configured to perform the method according to any of the preceding claims.

15. A computer program for controlling the operation of a wind turbine, wherein the wind turbine (100) comprises a wind turbine rotor (120) with one or more rotor blades (121, 122, 123), wherein the computer program comprises control instructions which, when executed by a processing unit (11) of a control system (10) of the wind turbine that operates at least one load reduction pitch control function (40, 50) configured to adjust a blade pitch angle to reduce a blade load, cause the processing unit (11) to perform the method according to any of claims 1-13.
